# EUROPEAN PATENT APPLICATION

(11) **EP 4 618 045 A1**
(43) Date of publication of application: **17.09.2025**
(21) Application number: 25162634.7
(22) Date of filing: 10.03.2025
(51) Int. Cl.: G06V 20/52, G06V 40/50, G06V 10/98

(54) **SECURITY INSPECTION METHOD AND APPARATUS, DEVICE, MEDIUM, AND PROGRAM PRODUCT**

(30) Priority: 11.03.2024 CN 202410275354
(71) Applicant: NUCTECH COMPANY LIMITED, Beijing 100084 (CN); Tsinghua University, Haidian District, Beijing 100084 (CN)
(72) Inventor: CHEN, Zhiqiang, Beijing, 100084 (CN); ZHANG, Li, Beijing, 100084 (CN); TANG, Hu, Beijing, 100084 (CN); LIU, Xin, Beijing, 100084 (CN); HUANG, Qingping, Beijing, 100084 (CN); WEI, Guohua, Beijing, 100084 (CN); CHEN, Jie, Beijing, 100084 (CN)
(74) Representative: Gunzelmann, Rainer

(57) **Abstract**

The present disclosure provides a security inspection method, including: tracking (S420) a movement trajectory of a target person and continuously acquiring a current image of a face of the target person when the target person is located in a specific region, where the movement trajectory includes a relative position information between the target person and at least one candidate position in the specific region; evaluating (S430) a quality of the current image and a quality of a candidate image after each acquisition of the current image, where the candidate image is a facial image of the target person with a highest quality after the target person enters the specific region; and updating (S460) the candidate image to be the current image and binding the candidate image to the movement trajectory in a case that the quality of the current image is higher than the quality of the candidate image. The present disclosure further provides a security inspection apparatus, a device, a storage medium, and a program product.

## Description

### TECHNICAL FIELD

The present disclosure relates to a field of security inspection, a field of artificial intelligence, or other fields, and more specifically, to a security inspection method and apparatus, a device, a medium, and a program product.

### BACKGROUND

In some places, security inspections are performed on individuals for safety reasons. Typically, a person being inspected may take an empty tray and place a carry-on luggage on the tray at a specific position (such as a sorting position). The tray carrying the luggage may then enter a security inspection channel for security inspection. In a scenario of security inspection, it is needed to automatically associate the person being inspected with the tray for easy tracking. When a prohibited item is identified in a bag, the corresponding person being inspected and luggage may be determined in time.

In a related art, a camera is used to capture a face of the person being inspected to perform an identity recognition and achieve a person-bag association. For example, a detection may start when the tray is placed at the specific position by the person being inspected, the face may be captured at a single angle, and the detection may end when the tray is pushed into a conveyor line of the security inspection channel.

In a process of implementing an inventive concept of the present disclosure, the inventors found that during a process of sorting and placing the bag, an angle between the person being inspected and the camera is relatively fixed, the time for capturing the face is short, and a capture angle is limited, which easily leads to a failure to capture a facial image suitable for recognition during the process. In addition, when a plurality of trays are used by a same person being inspected, a full process including face detection, capture, recognition and association is performed for each tray, and there is no information interaction between the plurality of trays. Moreover, a quality of the captured facial image is limited, which increases a risk of missed association or false association.

### SUMMARY

In an aspect of embodiments of the present disclosure, a security inspection method is provided, including: tracking a movement trajectory of a target person and continuously acquiring a current image of a face of the target person when the target person is located in a specific region, where the movement trajectory includes a relative position information between the target person and at least one candidate position in the specific region; evaluating a quality of the current image and a quality of a candidate image after each acquisition of the current image, where the candidate image is a facial image of the target person with a highest quality after the target person enters the specific region; and updating the candidate image to be the current image and binding the candidate image to the movement trajectory in a case that the quality of the current image is higher than the quality of the candidate image.

According to embodiments of the present disclosure, the method further includes: determining a target position selected by the target person from the at least one candidate position; acquiring a tray record for the target person based on the movement trajectory when a use of a first tray by the target person at the target position is detected, where the tray record includes a tray information used at any candidate position in the specific region within a predetermined period of time; and updating the tray record with the first tray and binding the first tray to the candidate image.

According to embodiments of the present disclosure, a first tracking identifier bound to the movement trajectory is assigned after the target person enters the specific region, and the tracking a movement trajectory of a target person includes: determining the relative position information based on the current image to update the movement trajectory in a case that the first tracking identifier is acquired; or matching the current image with the candidate image in a case that no first tracking identifier is acquired, and determining the relative position information based on the current image to update the movement trajectory in a case that the matching is successful.

According to embodiments of the present disclosure, an identity information of the target person and a standard facial image of the target person are acquired before the target person enters the specific region, and the standard facial image meets a quality requirement; and the tracking a movement trajectory of a target person further includes: in a case that no first tracking identifier is acquired and the current image is not successfully matched with the candidate image, matching the current image with the standard facial image, and determining the movement trajectory based on the identity information in a case that the current image is successfully matched with the standard facial image; and determining the relative position information based on the current image to update the movement trajectory in a case that the movement trajectory is determined.

According to embodiments of the present disclosure, the tracking a movement trajectory of a target person further includes: in a case that no movement trajectory is determined based on the identity information, assigning a second tracking identifier to the target person; determining the relative position information based on the current image to generate a new movement trajectory, where the new movement trajectory is bound to the second tracking identifier; and determining the current image as the candidate image and binding the candidate image to the new movement trajectory.

According to embodiments of the present disclosure, the movement trajectory and the candidate image of any person in the specific region are contained in a trajectory library; and a process of tracking the new movement trajectory of the target person includes: matching the candidate image for the new movement trajectory with each candidate image in the trajectory library; and merging, in a case that the candidate image for the new movement trajectory is successfully matched with a target candidate image in the trajectory library, the new movement trajectory with a movement trajectory corresponding to the target candidate image.

According to embodiments of the present disclosure, the determining the relative position information based on the current image includes: determining the relative position information based on at least two of an information of a device capturing the current image, a facial angle information of the current image or an area information of the current image.

According to embodiments of the present disclosure, the target position is determined based on the relative position information, and detecting a use of a first tray by the target person at the target position includes: scanning a tag of the first tray in response to the first tray being placed at the target position by the target person.

According to embodiments of the present disclosure, the method further includes: in a case that the tray record indicates a use of a second tray, determining the candidate image corresponding to the first tray in a case that the second tray is not bound to the candidate image; and binding the candidate image corresponding to the first tray to the second tray.

According to embodiments of the present disclosure, the binding the candidate image corresponding to the first tray to the second tray includes: in a case that the tray record indicates a use of the second tray by the target person at the target position, determining a total period of time of the target position being occupied by the target person and a sub-period of time of the second tray being used; and binding the candidate image corresponding to the first tray to the second tray in a case that the total period of time includes the sub-period of time.

According to embodiments of the present disclosure, the method further includes: sending a first binding message to a corresponding device for the target position and/or a first notification device, where the first binding message includes a message indicating that the first tray and the second tray are successfully bound to the candidate image.

According to embodiments of the present disclosure, the method further includes: in a case that the tray record indicates a use of the second tray by the target person at another candidate position different from the target position, sending a second binding message to a corresponding device for the target position and/or a first notification device, where the second binding message includes a message indicating that the first tray is successfully bound to the candidate image; and/or sending a third binding message to a corresponding device for the another candidate position and/or a second notification device, where the third binding message includes a message indicating that the second tray is successfully bound to the candidate image.

According to embodiments of the present disclosure, an identity information of the target person and a standard facial image of the target person are acquired before the target person enters the specific region, and the standard facial image meets a quality requirement; and the method further includes: after updating the candidate image to be the current image, matching the updated candidate image with the standard facial image to acquire the identity information of the target person.

In another aspect of embodiments of the present disclosure, a security inspection apparatus is provided, including: a tracking module configured to track a movement trajectory of a target person and continuously acquire a current image of a face of the target person when the target person is located in a specific region, where the movement trajectory includes a relative position information between the target person and at least one candidate position in the specific region; an evaluation module configured to evaluate a quality of the current image and a quality of a candidate image after each acquisition of the current image, where the candidate image is a facial image of the target person with a highest quality after the target person enters the specific region; and an update module configured to update the candidate image to be the current image and bind the candidate image to the movement trajectory in a case that the quality of the current image is higher than the quality of the candidate image.

In another aspect of embodiments of the present disclosure, an electronic device is provided, including: one or more processors; and a memory device configured to store one or more programs, where the one or more programs are configured to, when executed by the one or more processors, cause the one or more processors to implement the method described above.

In another aspect of embodiments of the present disclosure, a computer-readable storage medium having executable instructions therein is provided, where the instructions are configured to, when executed by a processor, cause the processor to implement the method described above.

In another aspect of embodiments of the present disclosure, a computer program product containing a computer program is provided, where the computer program is configured to, when executed by a processor, cause the processor to implement the method described above.

### BRIEF DESCRIPTION OF THE DRAWINGS

The above contents and other objectives, features and advantages of the present disclosure will be more apparent through the following description of embodiments of the present disclosure with reference to the accompanying drawings. In the accompanying drawings:
FIG. 1 schematically shows an application scenario diagram of a security inspection method according to an embodiment of the present disclosure;
FIG. 2 shows a top view of a candidate region according to an exemplary embodiment of the present disclosure;
FIG. 3 shows a top view of a specific region according to an exemplary embodiment of the present disclosure;
FIG. 4 schematically shows a flowchart of a security inspection method according to an embodiment of the present disclosure;
FIG. 5 schematically shows a flowchart of a security inspection method according to another embodiment of the present disclosure;
FIG. 6 schematically shows a flowchart of a security inspection method according to another embodiment of the present disclosure;
FIG. 7 schematically shows a flowchart of updating a movement trajectory according to an embodiment of the present disclosure;
FIG. 8a and FIG. 8b schematically show flowcharts of a security inspection method according to another embodiment of the present disclosure;
FIG. 9 schematically shows a block diagram of a security inspection system according to an embodiment of the present disclosure;
FIG. 10 schematically shows a structural block diagram of a security inspection apparatus according to an embodiment of the present disclosure; and
FIG. 11 schematically shows a block diagram of an electronic device suitable for implementing a security inspection method according to an embodiment of the present disclosure.

### DETAILED DESCRIPTION OF EMBODIMENTS

Embodiments of the present disclosure will be described below with reference to the accompanying drawings. However, it should be understood that these descriptions are merely exemplary and are not intended to limit the scope of the present disclosure. In the following detailed description, for ease of interpretation, many specific details are set forth to provide comprehensive understanding of embodiments of the present disclosure. However, it is clear that one or more embodiments may also be implemented without these specific details. In addition, in the following description, descriptions of well-known structures and technologies are omitted to avoid unnecessarily obscuring concepts of the present disclosure.

In technical solutions of the present disclosure, user information (including but not limited to user personal information, user image information, facial image information, user device information, such as position information, etc.) and data (including but not limited to data for analysis, stored data, displayed data, etc.) involved are all information and data authorized by a user or fully authorized by all parties. A collection, storage, use, processing, transmission, provision, disclosure and application, etc. of relevant data comply with relevant laws, regulations and standards of relevant countries and regions, take necessary security measures, and do not violate public order and good customs. In addition, corresponding operational interfaces are provided for users to choose whether to authorize or refuse.

The present disclosure provides a security inspection method for improving a quality of a facial image and reducing a risk of missed association or false association.

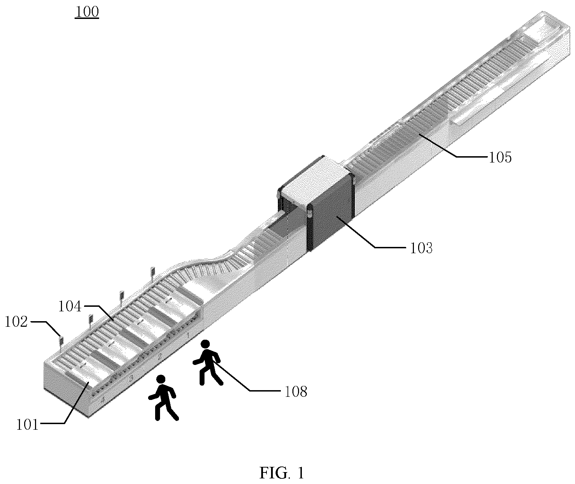

FIG. 1 schematically shows an application scenario diagram of a security inspection method according to an embodiment of the present disclosure. It should be noted that FIG. 1 is merely an example to which embodiments of the present disclosure may be applied, so as to help those skilled in the art understand technical contents of the present disclosure. However, it does not mean that embodiments of the present disclosure may not be applied to other devices, systems, environments or scenarios.

As shown in FIG. 1, an application scenario 100 in such embodiment may be applied to a security inspection in airport to convey a luggage of a passenger 108 for security inspection, sort an abnormal item, and return an empty tray. The application scenario 100 may include a plurality of candidate positions 101, a plurality of camera devices 102, a security inspection machine 103, a luggage input line 104, and a luggage output line 105.

When the passenger 108 enters the airport, a face and an identity information of the passenger 108 are first scanned by a verification device (not shown) at a verification station, so as to establish a temporary passenger database for the passenger 108, which includes an identity information and a standard facial image of the passenger 108.

Next, a security inspection is performed on the luggage. The passenger 108 is allowed to take and place an empty tray 107 at any candidate position 101, and for example, put a carry-on luggage and loose items on the tray 107. The tray 107 passes through the luggage input line 104, then passes through the security inspection machine 103 (such as an X-ray inspection) to determine whether the luggage is safe, and then passes through the luggage output line 105 for conveying.

In an exemplary embodiment, an RFID antenna for communication and an indicator light for displaying a working status are provided at the candidate position 101. Furthermore, the luggage input line 104 and the luggage output line 105 may include a plurality of belt conveyors which are sequentially arranged in a conveying direction of the tray 107.

In an exemplary embodiment, the security inspection machine 103 includes an X-ray-based imaging device, which is suitable for checking whether prohibited items such as drugs and explosives are contained in objects such as suitcases, packages, and handbags in places with high mobility of people such as stations, airports, stadiums, and shopping malls. The security inspection machine 103 mainly includes a support frame, a conveying mechanism, and a driving mechanism. An inspection space suitable for inspecting an object is formed in the support frame, and the inspection space has a first opening communicating with the outside. A shell made of a shielding material is provided on the support frame to prevent radiation leakage. The conveying mechanism is connected to the luggage input line and the luggage output line, and is suitable for carrying the object to move through the inspection space. An X-ray emitting and receiving device, such as a CT machine, is installed on the support frame to perform X-ray scanning inspection on the object conveyed to the inspection space by the conveying mechanism.

In an exemplary embodiment, the application scenario 100 may further include an image review unit (not shown), which is provided in an image review room distant from the security inspection machine 103, and which may achieve a remote communication with the security inspection machine 103. The remote communication may be achieved using any device or component that may be used for signal transmission, such as a wired one, a wireless one, or a radio frequency one.

Each item passing through the security inspection machine 103 may be classified as a normal item or a suspicious item according to an image review result. The normal item refers to an item that meets a security inspection standard. The suspicious item refers to an item that does not meet the security inspection standard or that contains another item not meeting the security inspection standard, which needs to be manually inspected.

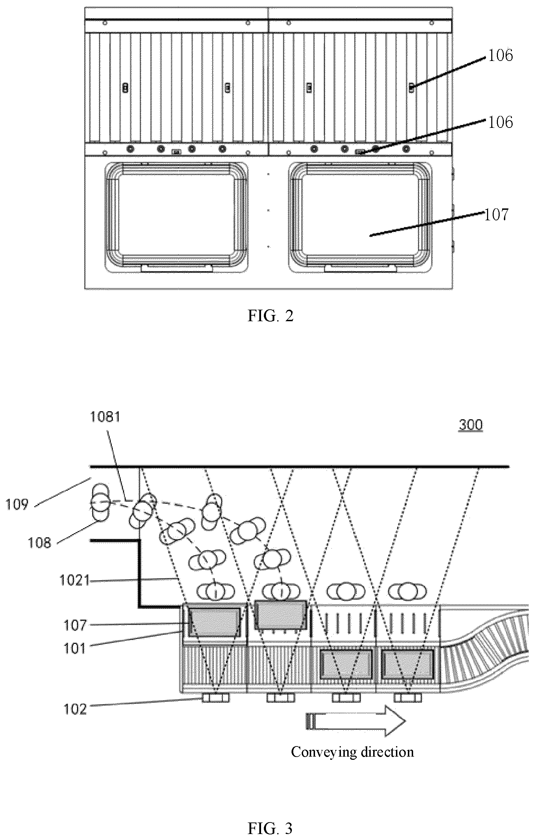

FIG. 2 shows a top view of a candidate region according to an exemplary embodiment of the present disclosure. FIG. 3 shows a top view of a specific region according to an exemplary embodiment of the present disclosure. The candidate region includes a region where a candidate position is located.

As shown in FIG. 2 and FIG. 3, an identity information confirmation and a face capture of the passenger 108 are completed at a verification station, and sent to a background server to establish a temporary passenger database for the passenger 108. Then the passenger 108 is allowed to enter a specific region 300 from a passenger inspection channel entrance 109, and autonomously choose to walk to any candidate position 101 on a line to form a movement route 1081.

As an example, a plurality of photoelectric inspection devices 106 may be provided at the candidate position 101 to sense a position of the tray 107. For example, three photoelectric inspection devices 106 such as photoelectric switches may be installed on a top of the candidate position 101. Two of the photoelectric switches may be located between conveying rollers, and a distance between the two is less than a length of the tray 107, while the other photoelectric switch may be closer to the tray 107. The three photoelectric switches are used to detect whether the tray 107 has left the candidate position 101. For example, when the three photoelectric switches shown are all blocked, and the photoelectric switch close to the tray 107 is first blocked and then unblocked, it may be determined that the tray 107 has left.

During an entire person-luggage tracking process, for example, during a period of time from the passenger 108 entering the specific region to leaving the specific region, it is possible to continuously track each passenger 108 using a plurality of camera devices 102 and perform a face recognition.

As shown in FIG. 3, the camera devices may correspond to the candidate positions respectively (for example only). Two adjacent camera devices 102 may have overlapping shooting ranges 1021, that is, images captured by the two cameras may contain the same content. For example, the shooting range 1021 of a first camera device 102 overlaps with the shooting range 1021 of a second camera device 102, then a first image captured by the first camera device 102 and a second image captured by the second camera device 102 contain a partial common region, so that a continuous tracking of the passenger may be achieved.

It should be understood that the number of lines (one line is shown in FIG. 1), candidate positions, security inspection machines and camera devices in FIG. 1 are merely illustrative. According to implementation needs, any number of lines, candidate positions, security inspection machines and camera devices may be provided. The technical solutions of the present disclosure are not limited to airports, but may also be applied to stadiums, border checkpoints, parks, shopping malls, cruise ships, trains, buses, subways, arenas, airports, office buildings, schools and other places.

Based on the scenarios described in FIG. 1 to FIG. 3, a security inspection method in embodiments of the present disclosure will be described in detail below with reference to FIG. 2 to FIG. 6.

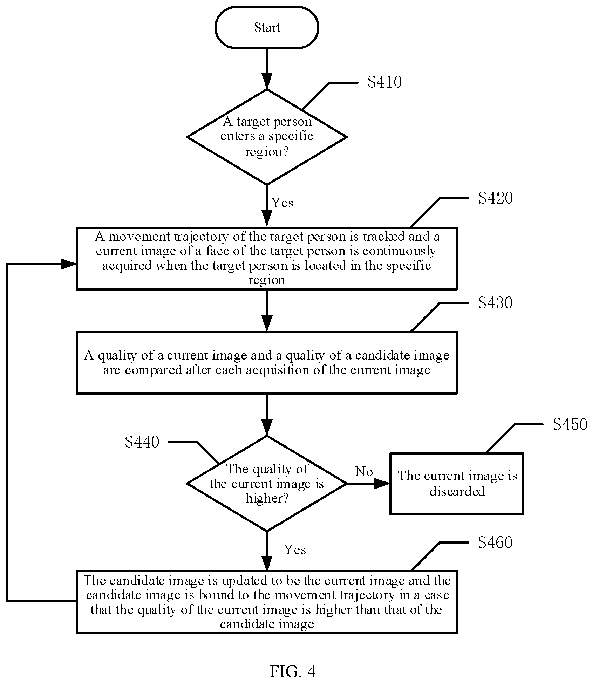

FIG. 4 schematically shows a flowchart of a security inspection method according to an embodiment of the present disclosure.

As shown in FIG. 4, such embodiment includes operations as follows.

In operation S410, it is detected whether a target person enters a specific region.

The target person may be anyone in the specific region. The specific region refers to a region provided for the target person to sort and place luggage items during the security inspection, as shown in FIG. 3. For example, the specific region may be monitored by a camera device in real time. By continuously acquiring images, it is possible to perform real-time tracking and promptly detect whether the target person has entered.

In operation S420, a movement trajectory of the target person is tracked and a current image of a face of the target person is continuously acquired when the target person is located in the specific region, where the movement trajectory includes a relative position information between the target person and at least one candidate position in the specific region.

The movement trajectory includes a movement path (such as a movement route 1081) and a position information of the target person in the specific region. The candidate position includes a sorting position provided for people to sort luggage. When it is detected that the target person has entered the specific region, a corresponding tracking record is triggered. For example, a feature of the captured facial image may be extracted and then matched with a features of a standard facial image to acquire an identity information. The movement trajectory may be bound to the identity information of the target person. The current image is, for example, a facial image of the target person acquired in real time. The candidate image is a facial image with a highest quality stored before the current image is acquired. The relative position information describes a relative position of the target person with each candidate position 101 in space. For example, the relative position information may indicate whether the target person is located on a left side, right side, upper side or lower side of each candidate position 101 and indicate a distance relationship between the target person and each candidate position 101.

For example, during the security inspection in airport, the target person is passenger A, the specific region includes the sorting region after the passenger enters a security inspection region in the airport, the movement trajectory includes a walking path and real-time coordinates of the passenger A in the specific region, the current image is a facial image of the passenger captured in real time by the camera, and the candidate image is the clearest and most accurate facial image extracted by an image processing technology after the passenger enters the luggage inspection region.

As an example, tracking the movement trajectory of the target person includes: monitoring a position and a movement of the target person in the specific region using various sensors or camera devices 102. These sensors may be infrared sensors, visible light sensors, or other suitable technologies. Through these sensors or camera devices 102, the position information of the target person may be acquired in real time. By periodically capturing images through the camera devices 102, it is possible to track the movement trajectory of the target person and continuously acquire the current image of the face of the target person.

In some exemplary embodiments, it is possible to acquire an image captured for the specific region at a target time point in a predetermined period of time, so as to acquire a set of facial images of the target person. A current position information of each facial image in the set of facial images on the target image at the target time point may be recorded. The movement trajectory of the set of facial images within the predetermined period of time may be output in a temporal order based on the current position information.

For example, for the target image in the set of facial images, at a start time point in the predetermined period of time, the position of the target person is determined to be coordinate A1. As time goes by, at a next time point, the position of the target person changes to coordinate A2. At a subsequent time point, the position of the target facial image changes to coordinate A3. These three coordinates are mapped into the movement trajectory of the same person in time series.

It may be understood that the movement trajectory of the target person does not have exactly the same function as the facial image. For example, the facial image may be used to determine the position so as to update the movement trajectory. Continuity of the movement trajectory may assist in determining whether the tracked target person is the same person. In addition, the facial image is further used for face recognition to determine the identity information of the target person, which is subsequently used for person-bag binding.

In addition to determining the position using the facial image, it is also possible to determine the position comprehensively according to parameters such as walking posture, height, clothing, etc. of the target person. Therefore, compared to the face recognition which is easily affected by image quality, the movement trajectory has higher stability and accuracy. In some exemplary embodiments, a full-body image or a half-body image of the target person may be captured, which contain regions other than the face. The full-body image or the half-body image contains a position of a specific part of the target person, where the specific part is a part of a human body other than the face. It is possible to determine a position box for the specific part by using SSD (Single ShotMultiBox Detector), R-FCN (Region-based Fully Convolutional Networks), etc. The specific part may be, for example, one or more of person's head, hands, or any other part other than the face.

For example, the passenger 108 appearing in a first frame image of continuous frame images may be determined as the target person. For the first frame image in the continuous frame images, a face detection may be performed first on the first frame image. If it is detected that a confidence level of the face of the target person is less than a predetermined value, it is possible to further perform a specific part detection on the first frame image and determine the position of the target person. Then, for a second frame image, it may be determined whether a person in the second frame image is the person in the first frame image according to the detected face or specific part of the person.

Referring to FIG. 3, at least one camera is provided in the specific region. In a case of a plurality of cameras, the fields of view of the plurality of cameras may overlap. The camera may be a fixed camera or a rotatable camera.

For example, the above-mentioned face recognition processing includes detecting a face region in the facial image. When the face region is detected, the facial image of the target image may be marked, which may be specifically executed according to actual scene requirements. The face detection process may adopt a face recognition method based on principal component analysis (PCA), a face recognition method based on elastic graph matching, a face recognition method based on support vector machine (SVM), a face recognition method based on deep neural network, or the like.

In operation S430, a quality of a current image and a quality of a candidate image are evaluated after each acquisition of the current image, where the candidate image is a facial image with a highest quality after the target person enters the specific region.

In operation S440, it is determined whether the quality of the current image is higher than the quality of the candidate image.

A quality indicator for evaluation may include at least one of angle, lighting, scale, clarity, recognition of the target person, facial key points, etc.

For example, the facial key points of the target person may be located in the current image, which may be some key points with strong representation ability in the face region, including eyes, eye corners, eye centers, eyebrows, nose, nose tip, mouth, mouth corners and facial contours.

The quality being lower may include a variety of situations, such as a face size being smaller than a threshold size, at least a portion of the face being blocked, a smaller number of facial key points being detected, an image clarity being lower than a predetermined value, a facial posture in the image not being a frontal posture, etc.

In operation S450, the current image is discarded if the quality of the current image is lower than the quality of the candidate image. This may save storage resources.

In operation S460, the candidate image is updated to be the current image and the candidate image is bound to the movement trajectory in a case that the quality of the current image is higher than the quality of the candidate image. The current image as the facial image with the highest quality becomes a new candidate image.

For example, the candidate image and the movement trajectory may be associated with each other using information such as timestamp and coordinate position, and stored in a same database table in the database. By binding the candidate image with the movement trajectory, it is possible to establish an association between the movement path, the real-time position and the facial image of the target person in the specific region. By evaluating the image quality and selecting the optimal image as a reference, it is possible to analyze and recognize the facial image more accurately according to the position and movement trajectory of the target person, thereby improving a recognition accuracy and reducing a misrecognition rate.

As shown in FIG. 4, the movement trajectory of the target person continues to be tracked. In an exemplary embodiment, at a later time point, the movement trajectory may be updated by determining the position change of the face or the specific part.

According to embodiments of the present disclosure, by tracking the movement trajectory of the target person and continuously acquiring the current image of the face, the time for the face capture is extended, and the relative position information between the target person and the specific candidate position may be obtained in time. The face capture and recognition may be performed without waiting for the tray being placed by the person being inspected, which breaks an original strong dependence of the person-bag association on the person being inspected and the tray placement position. By recording increasingly higher-quality facial information and acquiring the relative position information, it is possible to effectively avoid the problem of relatively fixed angle, ensure an accuracy of the face recognition in the specific region after expanding the capture range, and solve existing problems of low success rate in person-bag association and heavy guidance workload of security personnel.

In some embodiments, an identity information and a standard facial image of the target person may be acquired before the target person enters the specific region, where the standard facial image meets a quality requirement. After the candidate image is updated as the current image, the updated candidate image may be matched with the standard facial image to acquire the identity information of the target person.

For example, at an airport, an identity verification is performed on the target person first. The target person may be captured with the face facing the camera, and the image quality is manually checked by the staff or may be automatically determined. The quality requirement includes that the image contains complete and clear facial features.

According to embodiments of the present disclosure, if the candidate image is not updated, no matching is performed, and the candidate image with higher quality is matched with the standard facial image to acquire the identity information of the target person. Therefore, there is no need to match constantly, which reduces matching operations and saves computing resources.

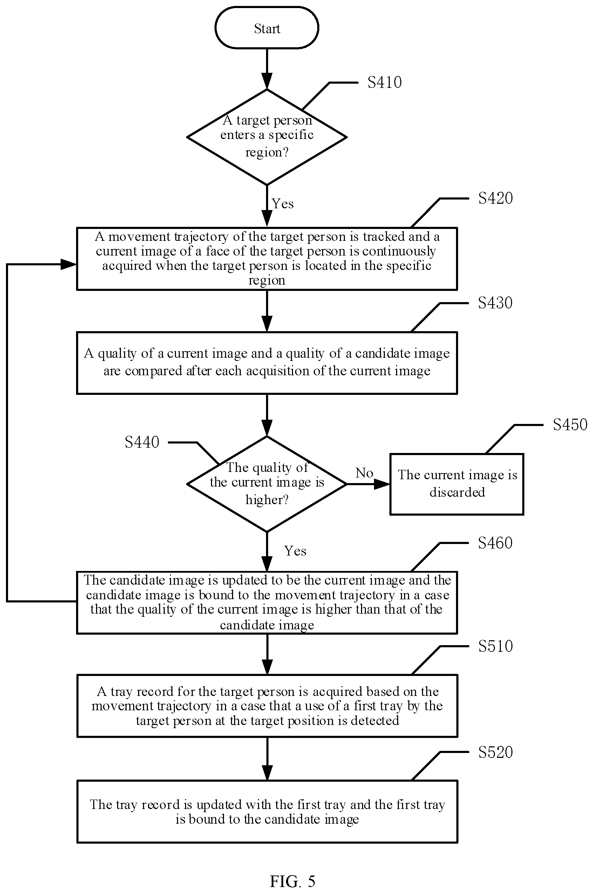

FIG. 5 schematically shows a flowchart of a security inspection method according to another embodiment of the present disclosure.

As shown in FIG. 5, such embodiment includes operation S410 to operation S460, which will not be repeated herein. Such embodiment further includes predetermining a target position selected by the target person from at least one candidate position, and performing operation S510 to operation S520.

In operation S510, a tray record for the target person is acquired based on the movement trajectory in a case that a use of a first tray by the target person at the target position is detected, where the tray record includes a tray information used at any candidate position in the specific region within a predetermined period of time. The predetermined period of time may be set manually or determined according to historical data, such as an average duration of a person staying in the specific region in a security inspection process.

In operation S520, the tray record is updated with the first tray and the first tray is bound to the candidate image.

The candidate image may be bound to the personal identity information, so that the binding of the tray and the candidate image may achieve a binding of the tray and the personal information, thereby achieving comprehensive tracking of the target person. For example, when a plurality of trays 107 are used by a same passenger, the facial images captured corresponding to the trays 107 are inconsistent and may sometimes be unavailable. As the movement trajectory, the candidate image and the personal identity information are bound together, the plurality of trays 107 may achieve an information interaction based on the movement trajectory, and may be accurately bound to the same passenger. Furthermore, based on the quality comparison described above, it is determined whether to update the candidate image. If the candidate image is not updated, there is no need to match the candidate image with the standard facial image again since the existing candidate image has been matched with the standard facial image, so that a repeated face recognition may be reduced and the server computing power may be saved.

According to embodiments of the present disclosure, the face recognition is compensated through the movement trajectory, so that the person-bag association process may refer to the entire tracking trajectory for self-correction, and a dependence on a face recognition result is reduced. When the quality of the facial image is poor, an information interaction may be performed through a plurality of trays used by the same person being inspected to restore or correct the person-bag association, thereby improving an efficiency and success rate of the person-bag association.

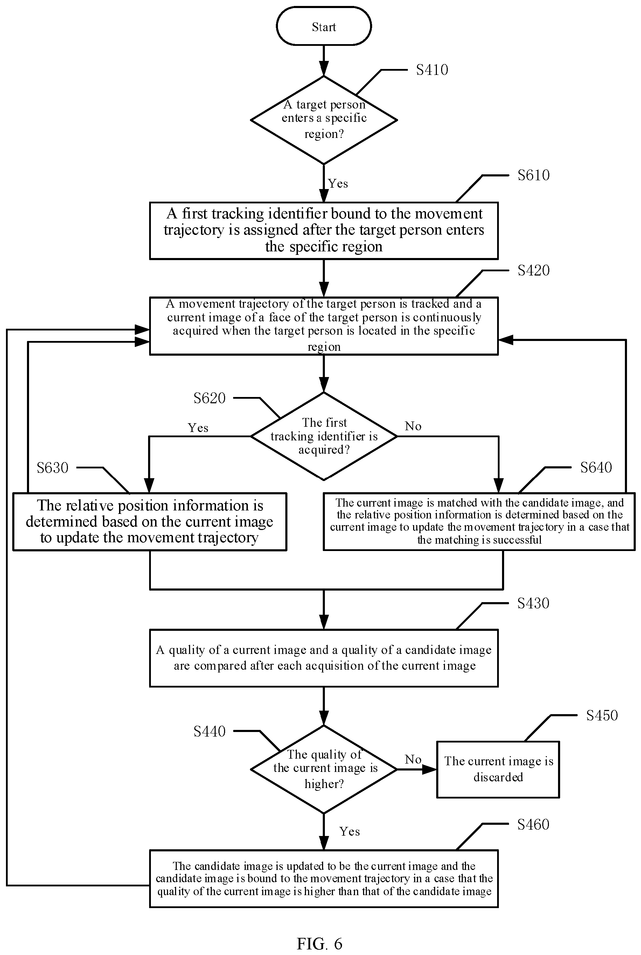

FIG. 6 schematically shows a flowchart of a security inspection method according to another embodiment of the present disclosure.

As shown in FIG. 6, such embodiment includes operation S410 to operation S460, which will not be repeated here. Such embodiment further includes operation S610 to operation S640.

In operation S610, a first tracking identifier bound to the movement trajectory is assigned after the target person enters the specific region.

In operation S620, it is determined whether the first tracking identifier is acquired.

In operation S630, the relative position information is determined based on the current image to update the movement trajectory in a case that the first tracking identifier is acquired.

For example, it is possible to determine one or more cameras that have captured the current image, determine the real-time coordinates of the target person according to the angle of the current image, the size of the face region, the camera position, etc., and then determine the relative position information according to the real-time coordinates and the coordinates of each candidate position.

In operation S640, the current image is matched with the candidate image in a case that no first tracking identifier is acquired, and the relative position information is determined based on the current image to update the movement trajectory in a case that the matching is successful.

The first tracking identifier refers to an identifier associated with the target person, and is used to track and identify the movement trajectory of the target person. The relative position information refers to a position information of the target person relative to each candidate position 101, such as coordinates, distance, etc.

For example, in a specific region of an airport, a tracking identifier is assigned to a passenger 108 after the passenger 108 enters that region. Then, a movement trajectory of the passenger 108 in the specific region may be tracked and recorded according to real-time images captured by cameras. If the first tracking identifier of the passenger 108 is acquired by the camera, the relative position information of the passenger 108 may be determined according to the current image, and the movement trajectory of the passenger 108 may be updated. If the camera fails to acquire the first tracking identifier of the passenger 108, the current image may be matched with the candidate image. If the matching is successful, the system may determine the relative position information of the passenger 108 according to the current image to update the movement trajectory of the passenger 108.

It may be understood that the camera may fail to acquire the first tracking identifier in two cases. A first case is that the tracking is interrupted and a mark of the first tracking identifier is lost for some reasons such as the target person being blocked by others. A second case is that the target person is new and has not been assigned a tracking identifier. In the second case, even if the current image is successfully matched with the candidate image, it is not possible to update the movement trajectory because no movement trajectory is stored.

It should be noted that the above operation sequences are merely exemplary and may be changed. For example, it is possible to first determine a candidate image for quality evaluation, and then acquire a first tracking identifier.

According to embodiments of the present disclosure, the movement trajectory may be updated in real time. When the camera fails to acquire the first tracking identifier of the target person, for example, when the tracking is interrupted, the movement trajectory may be retrieved by matching the current image with the candidate image.

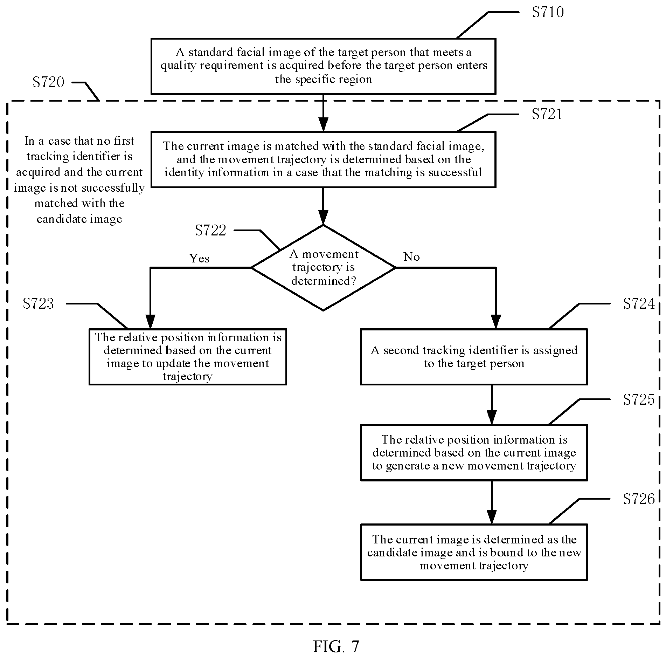

FIG. 7 schematically shows a flowchart of updating the movement trajectory according to an embodiment of the present disclosure.

As shown in FIG. 7, such embodiment includes operations as follows.

In operation S710, an identity information and a standard facial image of the target person are acquired before the target person enters the specific region, where the standard facial image meets a quality requirement.

In operation S720, in a case that no first tracking identifier is acquired and the current image is not successfully matched with the candidate image, tracking the movement trajectory of the target person includes operation S721 to operation S726.

In operation S721, the current image is matched with the standard facial image, and the movement trajectory is determined based on the identity information in a case that the matching is successful.

If the current image is qualified, the current image may be successfully matched with the standard facial image. If the current image is unqualified, for example, if the face is blocked by a mask, a hat, etc., the current image may not be matched successfully with the standard facial image. In this case, an abnormal tracking identifier is assigned, the face is continuously captured, and operation S721 continues to be executed.

In operation S722, it is determined whether a movement trajectory is determined.

When the current image is successfully matched with the standard facial image, the identity information of the target person may be acquired, and then the movement trajectory may be searched based on the identity information. If the movement trajectory of the target person has been successfully bound to the identity information, the movement trajectory may be determined. If a movement trajectory is retrieved but not bound to the identity information due to the quality of the facial image, the movement trajectory cannot be determined.

In operation S723, the relative position information is determined based on the current image to update the movement trajectory in a case that the movement trajectory is determined.

In some embodiments, determining the relative position information based on the facial image involved in the present disclosure may include the following steps. Key feature points or feature descriptors are extracted from the facial image, such as position and shape features of eyes, nose, mouth, etc. The camera may be calibrated to acquire intrinsic and extrinsic parameters of the camera so as to determine a position and a direction of the camera. According to the intrinsic and extrinsic parameters of the camera, a two-dimensional position of the facial feature points may be converted into coordinates in a three-dimensional space. By comparing the position of the facial feature points in the three-dimensional space with the position of the camera, a specific position of the target person may be calculated. The relative position information may be determined according to the position of the target person and each candidate position 101 in the three-dimensional space. Subsequently, a position change of the target person may be estimated and updated in real time according to continuous facial image data by using a tracking algorithm (such as Kalman filtering, particle filtering, etc.).

It may be understood that the image of the specific part may be replaced by the facial image, or may be processed together with the facial image according to the above steps to determine the relative position information.

By matching the current image with the standard facial image, the identity information of the target person may be acquired, and then the movement trajectory may be searched based on the identity information and updated.

In operation S724, a second tracking identifier is assigned to the target person in a case no movement trajectory is determined based on the identity information.

In operation S725, the relative position information is determined based on the current image to generate a new movement trajectory, and the new movement trajectory is bound to the second tracking identifier.

In operation S726, the current image is determined as the candidate image and is bound to the new movement trajectory.

For example, before the target person enters the specific region of the airport, operation S710 is executed to acquire a standard facial image of the target person that meets the quality requirement. Then, in operation S721 to operation S726, the current image may be matched with the candidate image if no first tracking identifier is acquired. If the matching is successful, the identity information is determined according to the standard facial image, and then the movement trajectory of the target person is determined. If no movement trajectory is determined, a second tracking identifier may be assigned to the target person, and the relative position information is determined according to the current image to generate a new movement trajectory. In this case, the current image is determined as the candidate image and is bound to the new movement trajectory.

It may be understood that the second tracking identifier may be assigned in a case that no tracking identifier has been assigned to the target person, or in a case that a tracking identifier has been assigned but the identity information cannot be acquired due to an unqualified facial image and the tracking is interrupted so that the original movement trajectory record cannot be retrieved

According to embodiments of the present disclosure, the relative position information in the movement trajectory may be updated in real time during the movement process. Even if the tracking is interrupted, the movement trajectory may be retrieved and updated by matching the current image with the standard facial image. Even if the original movement trajectory cannot be retrieved, or the target person appears in the specific region for the first time, a second tracking identifier may be assigned in time and a new movement trajectory may be generated to continuously track the target person.

In some embodiments, the movement trajectory and the candidate image of any person in the specific region may be contained in a trajectory library. A process of tracking the new movement trajectory of the target person includes: matching the candidate image for the new movement trajectory with each candidate image in the trajectory library. If the candidate image for the new movement trajectory is successfully matched with a target candidate image in the trajectory library, the new movement trajectory may be merged with a movement trajectory corresponding to the target candidate image.

The movement trajectory of any person in the specific region and the corresponding candidate image are stored in the trajectory library, such as a same database or table. For example, when a person enters the specific region, a movement trajectory of the person may be recorded and stored in the trajectory library together with the corresponding candidate image. As shown in FIG. 7, when it fails to determine an existing tracking identifier and no movement trajectory of the target person is determined through the standard facial image, a second tracking identifier may be assigned to the target person, and the relative position information of the target person may be determined according to the current image to generate a new movement trajectory.

For example, if it fails to retrieve the original movement trajectory, and no identity information is bound to the original movement trajectory but a facial image has been captured, then in a subsequent process of tracking the new movement trajectory, it is possible to compare the facial image in the new movement trajectory with the candidate image in each movement trajectory in the trajectory library to determine a similarity. If the similarity is greater than a threshold, a merging operation is performed. The similarity may be obtained by calculating a Euclidean distance or by a classification using a machine learning model, which is not limited here. In other words, when the facial image in the new movement trajectory in the trajectory library is identical with a facial image in an arbitrary movement trajectory, that is, when a similarity threshold condition is met, it is determined that the personal information indicated by the new movement trajectory and the personal information indicated by the arbitrary movement trajectory belong to the same person.

According to embodiments of the present disclosure, if the candidate image in the new movement trajectory is successfully matched with the target candidate image in the trajectory library, the new movement trajectory may be merged with the movement trajectory corresponding to the target candidate image to achieve an update of a complete movement trajectory of the target person. In addition, the number of movement trajectories may be reduced, which facilitates data management and save storage space.

In some embodiments, determining the relative position information based on the current image includes: determining the relative position information based on at least two of an information of a device capturing the current image, a facial angle information of the current image or an area information of the current image.

The information of the device capturing the current image may include, for example, an installation position of the camera and its relative position to the candidate position. The facial angle information refers to an angle information of the face of the target person in the current image, such as a tilt angle and a rotation angle of a head. The area information refers to an area of a region occupied by the face of the target person in the current image. For example, by analyzing the area of the region occupied by the face of the target person in the current image, it is possible to calculate the relative position relationship between the target person and the camera, and then calculate the relative position relationship between the target person and each candidate position.

According to embodiments of the present disclosure, the relative position of the target person in the current image may be determined according to multiple parameters such as the device information, the facial angle information and the area information, so that the accuracy and stability of the relative position of the target person may be improved.

In some embodiments, the target position is determined based on the relative position information, and detecting the use of the first tray by the target person at the target position includes: scanning a tag of the first tray in response to the first tray being placed at the target position by the target person.

The target position may be any candidate position 101. According to the relative position information in the movement trajectory of the target person, a specific position of the target person may be determined, for example, whether the target person is on a left or right side of the target position and a distance from the target person to the target position may be determined. If the target person is facing a candidate position and a distance is less than a threshold (such as 10 centimeters, for example only), it means that the position is selected by the target person as the target position for sorting luggage. Then, it is possible to scan the tag of the first tray using a scanner to identify and record the first tray or an information about items on the first tray.

According to embodiments of the present disclosure, the target position of the target person may be accurately determined according to the relative position information, an action of the target person placing the first tray may be promptly responded to, and the tag of the first tray may be scanned to identify and record the tray 107.

In some embodiments, if the tray record indicates a use of a second tray, the method further includes: determining a candidate image corresponding to the first tray in a case that the second tray is not bound to the candidate image; and binding the candidate image corresponding to the first tray to the second tray. Therefore, the candidate image may be updated and identified by capturing faces multiple times, so that a tray that failed to be bound may be re-bound.

The second tray refers to another tray 107 for storing items, which is used in a different period of time or operation from the first tray. For example, if the second tray is first used by the target person and the first tray is subsequently used by the target person, the second tray is another tray 107 used after the first tray.

The binding as referred to in the present disclosure refers to associating two or more elements or information together so that they may be processed or recorded as a whole.

When the second tray is used by the target person but the facial image is unqualified due to occlusion or angle problems, the candidate image is difficult to be successfully matched with the standard facial image, and the identity information cannot be acquired, so that the second tray is not bound to the candidate image.

By determining the candidate image corresponding to the first tray, it may be bound to the second tray to ensure that the usage information of the two trays may be associated with each other so that the tray usage by the same person may be accurately analyzed and recorded later.

In some embodiments, binding the candidate image corresponding to the first tray to the second tray in a case that the tray record indicates a use of the second tray by the target person at the same target position includes: determining a total period of time of the target position being occupied by the target person and a sub-period of time of the second tray being used; and binding the candidate image corresponding to the first tray to the second tray in a case that the total period of time includes the sub-period of time.

The total period of time includes a time when a first use of the target position by the target person is detected to a time when a last use of the target position by the target person is detected. The sub-period of time includes a time when a first use of the second tray by the target person at the target position is detected to a time when a last use of the second tray is detected.

For example, if the target person stays at the target position and uses a plurality of trays to sort luggage, the credibility of each tray being used by the target person may be further improved by determining that the total period of time covers the use time of each tray 107. In addition, if the target person stayed at the target position to use the first tray and then left, then another person stayed at the target position to use another tray and then left, and finally the target person came to the target position to use the second tray, this also meets the condition that the total period of time includes the sub-period of time.

According to embodiments of the present disclosure, it is possible to determine an overlapping portion of two periods of time according to the tray usage by the target person at the target position and the period of time of the second tray being used, thereby improving the credibility of the plurality of trays being used by the same person, and the candidate image corresponding to the first tray may be bound to the second tray to reduce the risk of erroneous binding.

In some embodiments, a first binding message may be sent to a corresponding device for the target position and/or a first notification device, where the first binding message includes a message indicating that the first tray and the second tray are successfully bound to the candidate image.

When the first tray and the second tray are successfully bound to the candidate image, a message containing a successful binding information may be generated and sent to the corresponding device for the target position or the first notification device. For example, the first notification device may include a speaker, a display, a touch screen or an information display panel. The target person may place the tray on the luggage input line after seeing or hearing the first binding message. The corresponding device (such as a terminal device, a computer, etc.) for the target position may transmit the message to the background server for updating the movement trajectory or send the message to other applications.

In some embodiments, in a case that the tray record indicates a use of the second tray by the target person at another candidate position different from the target position, a second binding message is sent to the corresponding device for the target position and/or the first notification device, where the second binding message includes a message indicating that the first tray is successfully bound to the candidate image; and/or a third binding message is sent to a corresponding device for the another candidate position and/or a second notification device, where the third binding message includes a message indicating that the second tray is successfully bound to the candidate image.

The second notification device may be another speaker, another display, another touch screen or another dedicated information display panel for displaying an information related to the second tray that has been used.

When the target person first uses the second tray at the another candidate position, the facial image and the second tray are not successfully bound. Then, based on the movement trajectory, the facial image that meets the requirements may be bound to the second tray when the first tray is used at the target position, so that the binding message may be transmitted across sorting positions.

That is, when the target person is at the target position, it is also possible to update the binding message for the another candidate position. The binding message includes a message indicating a successful binding of the tray and the facial image. A prerequisite for the successful binding is, for example, that the highest-quality facial image may be successfully matched with the standard facial image, then the identity information may be acquired, and the user of each tray may be determined.

The target person may place the tray on the input line after seeing or hearing the binding message. The corresponding device for the target position and the corresponding device for the another candidate position may transmit the message to the background server for updating the movement trajectory, or send the message to other applications. By automatically sending the message indicating the successful binding, it is possible to reduce manual operations and waiting time and improve operational efficiency. It is also possible to simplify a subsequent processing flow so that relevant person may handle related items more quickly and accurately.

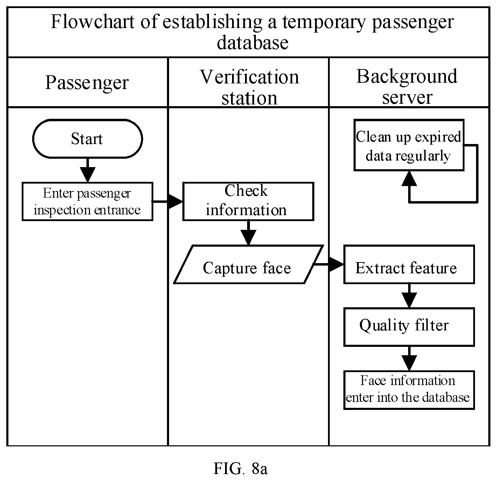

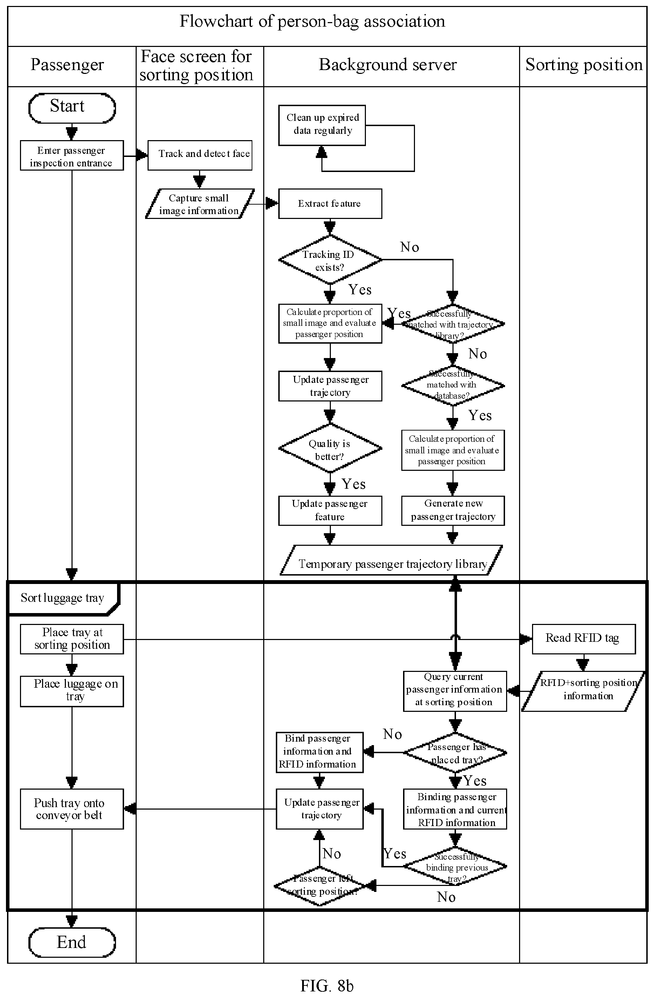

FIG. 8a and FIG. 8b schematically show flowcharts of a security inspection method according to another embodiment of the present disclosure.

Referring to FIG. 8a, the passenger 108 enters a passenger inspection channel entrance 109, an information verification for the passenger 108 is performed at the verification station, and the face is captured to acquire a standard facial image. The background server may extract a feature of the standard facial image. After quality filtering, if the feature meets the quality requirement, the facial information is entered into a temporary passenger database. The background server may clean up expired data regularly, such as daily, weekly or monthly.

Referring to FIG. 8b, the passenger 108 enters the passenger inspection channel.

When the passenger 108 enters a viewing angle of a face screen (i.e., the camera device 102, having a display screen with camera and face recognition functions), the face screen starts tracking and detecting the passenger 108, for example, based on the face and the specific part, which is not affected by wearing a hat, sunglasses or a mask. The face screen may capture a small facial image information and transmit a small facial image and coordinates to the background server.

The background server may establish a temporary passenger trajectory library. After receiving the image, the background server may acquire a device information of the current face screen and a line to which the face screen belongs, and extract a facial feature to determine whether a tracking ID (first tracking identifier) for the face exists.

If the tracking ID already exists, a position of the passenger may be evaluated. For example, a relative position between the passenger 108 and any candidate position 101 may be evaluated comprehensively according to coordinates of the small image, a quality information of the facial image and an RFID reading result, and the movement trajectory may be updated using the position. It is then determined whether the current facial image has a higher quality than the existing facial image. If yes, the current image is determined as the candidate image and the feature record of the passenger 108 is updated in the temporary passenger trajectory library.

If no tracking ID exists, the background server may match the current facial image with the temporary passenger trajectory library on the current line. If the matching is successful, the position of the passenger is evaluated, the movement trajectory is updated, and the image quality is compared. In this case, only the face without tracking ID is compared, so that the number of face comparisons is reduced, and the problem of the same passenger having multiple tracking IDs after tracking is interrupted may be effectively avoided.

If the current facial image is not successfully matched with the temporary passenger trajectory library on the current line, the background server may match the current facial image with the temporary passenger database. If the matching is successful, the trajectory information of the tracked passenger 108 may be updated, and the relative position between the passenger 108 and the target position may be evaluated comprehensively according to the coordinates of small image, the quality information of the facial image and the RFID reading result. Finally, a new record may be added to the temporary passenger trajectory library.

Referring to FIG. 8b, the passenger 108 may sort the luggage tray 107 and place the luggage. The face screen for the sorting position is a face screen for the target position. The sorting position is the candidate position, and the target position is the sorting position used by the passenger.

When the RFID luggage tray 107 is placed on a platform at the target position and the passenger 108 starts sorting the luggage, an RFID tag reader may send a read RFID information to the background server.

The background server may acquire the corresponding movement trajectory according to the ID of the candidate position to which the RFID belongs. If it is determined from the trajectory that the current passenger 108 has used the tray at the current target position within the specified time, the movement trajectory may be updated using the current RFID information, and the bound passenger and RFID information may be returned to the device and the face screen for the target position.

After receiving a signal indicating that the person-bag association is successful, the face screen prompts the passenger 108 to push the tray 107 onto the line through the screen display.

If the background server determines from the trajectory that the current passenger has used the tray at the current target position but no qualified facial image is captured during the process, it may result in that the RFID in the message pushed to the corresponding device and face screen for the target position is not bound to the passenger information. In this case, the background server may first determine whether the time when the current passenger occupies the current target position overlaps with the time of the last use of the tray. For example, it may be determined whether the passenger has left the target position. If not, it means that the time when the current passenger occupies the current target position overlaps with the time of the last use of the tray. Then a message indicating successful binding may be further sent to the same target position or another candidate position to update the received binding relationship, for other service applications.

Referring to FIG. 8b, the passenger 108 pushes the tray 107 onto a line, such as the luggage input line 104.

Based on the above-mentioned security inspection method, the present disclosure further provides a security inspection system 900.

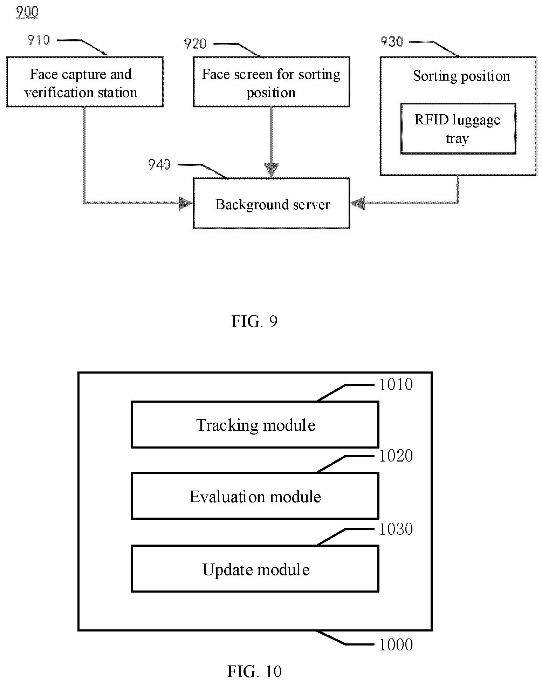

FIG. 9 schematically shows a block diagram of a security inspection system according to an embodiment of the present disclosure.

As shown in FIG. 9, the security inspection system includes a face screen at a sorting position on a passenger inspection line, a background server, an RFID luggage tray 107, and a sorting position.

The face screen at the sorting position on the passenger inspection line is used to track and detect the face of the passenger 108 who enters the camera's field of view, capture a small facial image and evaluate a quality of the small facial image, and transmit the small image that meets the quality requirement to the background server.

The background server is used to receive small facial images from two channels and perform quality filtering. A first channel is to receive facial images from the verification station to establish a temporary passenger database. A second channel is to receive facial images to build a temporary passenger trajectory library which is in units of lines and is matched and associated with the temporary passenger database. For a facial image with a continuous trajectory and a higher quality, a feature value is first extracted and then the trajectory of the target passenger is updated. For a facial image without trajectory record, a feature is extracted and matched with all the facial images in the temporary passenger trajectory library on the line. If the matching is successful, the facial image is associated and the original trajectory is updated. If the matching is unsuccessful, the facial image may be matched with the temporary passenger database, and a new trajectory is generated after the matching is successful.

The RFID luggage tray 107 is used to hold the passenger luggage. The tray is embedded with an RFID tag to identify the passenger luggage.

The sorting position is used to demarcate a region and provide a platform for the passenger 108 to put the luggage on the tray 107. When the passenger 108 places the tray 107 on the platform, the RFID detector in the platform may read the RFID tag information of the tray and send the information to the background server. The background server may bind an information of the passenger whose tracking trajectory is located here with the tray information according to the sorting position identifier to achieve a person-bag association.

Using the security inspection method and the security inspection system of the present disclosure effectively avoids a strong dependence of the person-bag association on the passenger and the sorting position, expands the range of face capture, and effectively reduces a rate of missed face recognition. In addition, the face recognition is compensated through face tracking, so that the person-bag association process may refer to the entire tracking trajectory for self-correction, thereby improving the accuracy of person-bag association and a reuse rate of results, saving server computing power, and reducing the workload of security personnel in guiding passengers in person-bag association.

It may be understood that machine learning algorithms and inference engines may be incorporated into the background server to increase the accuracy and efficiency of the tracking, the face recognition, and the update of movement trajectory.

Based on the above-mentioned security inspection method and security inspection system, the present disclosure further provides a security inspection apparatus, which may be installed in the background server 940. The apparatus will be described in detail below with reference to FIG. 10.

FIG. 10 schematically shows a structural block diagram of a security inspection apparatus 1000 according to an embodiment of the present disclosure.

As shown in FIG. 10, the security inspection apparatus 1000 may include a tracking module 1010, an evaluation module 1020, and an update module 1030.

The tracking module 1010 may perform operation S1010 to track the movement trajectory of the target person when the target person is located in the specific region, and continuously acquire the current image of the face of the target person, where the movement trajectory includes the relative position information between the target person and at least one candidate position in the specific region.

The evaluation module 1020 may perform operation S1020 to evaluate a quality of the current image and a quality of a candidate image after each acquisition of the current image, where the candidate image is a facial image with a highest quality after the target person enters the specific region.

The update module 1030 may perform operation S 1030 to update the candidate image to be the current image and bind the candidate image to the movement trajectory in a case that the quality of the current image is higher than the quality of the candidate image.

In some embodiments, the security inspection apparatus 1000 may further include: a tray binding module used to acquire a tray record for the target person based on the movement trajectory in a case of a use of a first tray by the target person at the target position is detected; and a tray record update module used to update the tray record with the first tray and bind the first tray to the candidate image.

In some embodiments, the tracking module 1010 is further used to: determine the relative position information based on the current image so as to call the update module 1030 to update the movement trajectory in a case that the first tracking identifier is acquired; or match the current image with the candidate image in a case that no first tracking identifier is acquired, and determine the relative position information based on the current image so as to call the update module 1030 to update the movement trajectory in a case that the matching is successful.

In some embodiments, in a case that no first tracking identifier is acquired and the current image is not successfully matched with the candidate image, the tracking module 1010 is further used to: match the current image with a standard facial image; determine the movement trajectory based on the identity information in a case that the matching is successful; and determine the relative position information based on the current image so as to call the update module 1030 to update the movement trajectory in a case that the movement trajectory is determined.

In some embodiments, in a case that no movement trajectory is determined based on the identity information, the tracking module 1010 is further used to: assign a second tracking identifier to the target person; determine the relative position information based on the current image to generate a new movement trajectory, where the new movement trajectory is bound to the second tracking identifier; and determine the current image as the candidate image and bind the candidate image to the new movement trajectory.

In some embodiments, in a process of tracking the new movement trajectory of the target person, the tracking module 1010 is further used to: match the candidate image for the new movement trajectory with each candidate image in the trajectory library; and in a case that the candidate image for the new movement trajectory is successfully matched with a target candidate image in the trajectory library, merge the new movement trajectory with a movement trajectory corresponding to the target candidate image.

In some embodiments, the update module 1030 is further used to: match the candidate image for the new movement trajectory with each candidate image in the trajectory library; and in a case that the candidate image for the new movement trajectory is successfully matched with a target candidate image in the trajectory library, merge the new movement trajectory with a movement trajectory corresponding to the target candidate image.

In some embodiments, the tray binding module is further used to: determine the target position of the target person based on the relative position information; and scan a tag of the first tray in response to the first tray being placed by the target person at the target position.

In some embodiments, the tray binding module is further used to: determine the candidate image corresponding to the first tray in a case that the second tray is not bound to the candidate image; and bind the candidate image corresponding to the first tray to the second tray.

In some embodiments, the tray binding module is further used to: determine a total period of time of the target position being occupied by the target person and a sub-period of time of the second tray being used; and bind the candidate image corresponding to the first tray to the second tray in a case that the total period of time includes the sub-period of time.

In some embodiments, the tray binding module is further used to send a first binding message to a corresponding device for the target position and/or a first notification device, where the first binding message includes a message indicating that the first tray and the second tray are successfully bound to the candidate image.

In some embodiments, the tray binding module is further used to: send a second binding message to the corresponding device for the target position and/or the first notification device, where the second binding message includes a message indicating that the first tray is successfully bound to the candidate image; and/or send a third binding message to a corresponding device for another candidate position and/or a second notification device, where the third binding message includes a message indicating that the second tray is successfully bound to the candidate image.

In some embodiments, the security inspection apparatus 1000 further includes an image matching module, which is used to match the updated candidate image with the standard facial image to acquire the identity information of the target person.

It should be noted that the security inspection apparatus 1000 includes modules for executing the steps of any one of the embodiments described in FIG. 2 to FIG. 8. The implementation methods, technical problems solved, functions achieved, and technical effects produced of each module/unit/sub-unit in the apparatus part embodiments are the same or similar to the implementation methods, technical problems solved, functions achieved, and technical effects produced of the corresponding step in the method part embodiments, which will not be repeated here.

According to embodiments of the present disclosure, any number of the tracking module 1010, the evaluation module 1020 and the update module 1030 may be combined into one module for implementation, or any one of the modules may be divided into a plurality of modules. Alternatively, at least part of the functions of one or more of these modules may be combined with at least part of the functions of other modules and implemented in one module.

According to embodiments of the present disclosure, at least one of the tracking module 1010, the evaluation module 1020 and the update module 1030 may be implemented at least partially as a hardware circuit, such as a field programmable gate array (FPGA), a programmable logic array (PLA), a system on chip, a system on substrate, a system on package, an application specific integrated circuit (ASIC), or may be implemented by hardware or firmware in any other reasonable manner of integrating or encapsulating the circuit, or may be implemented by any one of the three implementation modes of software, hardware and firmware or an appropriate combination thereof. Alternatively, at least one of the tracking module 1010, the evaluation module 1020 and the update module 1030 may be at least partially implemented as a computer program module that may perform corresponding functions when executed.

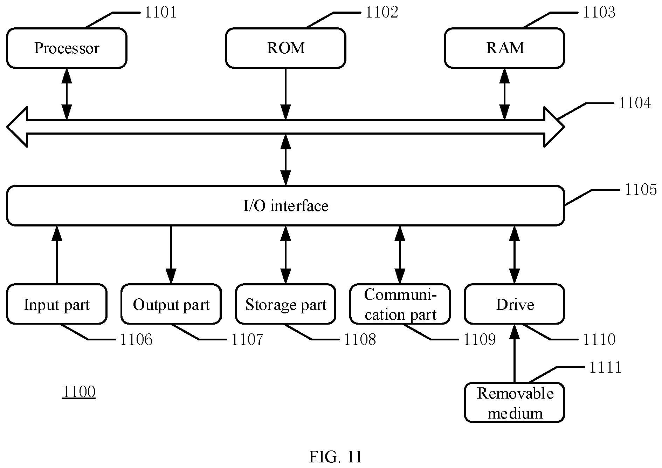

FIG. 11 schematically shows a block diagram of an electronic device suitable for implementing a security inspection method according to an embodiment of the present disclosure. The electronic device may include a background server.

As shown in FIG. 11, an electronic device 1100 according to embodiments of the present disclosure includes a processor 1101, which may execute various appropriate actions and processing according to the program stored in a read only memory (ROM) 1102 or the program loaded into a random access memory (RAM) 1103 from a storage part 1108. The processor 1101 may, for example, include a general-purpose microprocessor (for example, CPU), an instruction set processor and/or a related chipset and/or a special-purpose microprocessor (for example, an application specific integrated circuit (ASIC)), and the like. The processor 1101 may further include an on-board memory for caching purposes. The processor 1101 may include a single processing unit or multiple processing units for executing different actions of the method flow according to embodiments of the present disclosure.

Various programs and data required for the operation of the device 1100 are stored in the RAM 1103. The processor 1101, the ROM 1102 and the RAM 1103 are connected to each other through a bus 1104. The processor 1101 executes various operations of the method flow according to embodiments of the present disclosure by executing the programs in the ROM 1102 and/or the RAM 1103. It should be noted that the program may also be stored in one or more memories other than the ROM 1102 and the RAM 1103. The processor 1101 may also execute various operations of the method flow according to embodiments of the present disclosure by executing the programs stored in the one or more memories.

According to embodiments of the present disclosure, the electronic device 1100 may further include an input/output (I/O) interface 1105 which is also connected to the bus 1104. The electronic device 1100 may further include one or more of the following components connected to the I/O interface 1105: an input part 1106 including a keyboard, a mouse, etc.; an output part 1107 including a cathode ray tube (CRT), a liquid crystal display (LCD), etc. and a speaker, etc.; a storage part 1108 including a hard disk, etc.; and a communication part 1109 including a network interface card such as a LAN card, a modem, and the like. The communication part 1109 performs communication processing via a network such as the Internet. A drive 1110 is also connected to the I/O interface 1105 as required. A removable medium 1111, such as a magnetic disk, an optical disk, a magneto-optical disk, a semiconductor memory, and the like, is installed on the drive 1110 as required, so that the computer program read therefrom is installed into the storage part 1108 as needed.

The present disclosure further provides a computer-readable storage medium, which may be included in the device/apparatus/system described in the above embodiments; or exist alone without being assembled into the device/apparatus/system. The above-mentioned computer-readable storage medium carries one or more programs that when executed, perform the methods according to embodiments of the present disclosure.

According to embodiments of the present disclosure, the computer-readable storage medium may be a non-transitory computer-readable storage medium, for example, may include but not limited to: a portable computer disk, a hard disk, a random access memory (RAM), a read-only memory (ROM), an erasable programmable read-only memory (EPROM or flash memory), a portable compact disk read-only memory (CD-ROM), an optical storage device, a magnetic storage device, or any suitable combination of the above. In the present disclosure, the computer-readable storage medium may be any tangible medium that contains or stores programs that may be used by or in combination with an instruction execution system, apparatus or device. For example, according to embodiments of the present disclosure, the computer-readable storage medium may include the above-mentioned ROM 1102 and/or RAM 1103 and/or one or more memories other than the ROM 1102 and RAM 1103.

Embodiments of the present disclosure further include a computer program product, which contains a computer program. The computer program contains program code for performing the method shown in the flowchart. When the computer program product runs in a computer system, the program code causes the computer system to implement the method provided in embodiments of the present disclosure.

When the computer program is executed by the processor 1101, the above-mentioned functions defined in the system/apparatus of embodiments of the present disclosure are performed. According to embodiments of the present disclosure, the above-described systems, apparatuses, modules, units, etc. may be implemented by computer program modules.

In an embodiment, the computer program may rely on a tangible storage medium such as an optical storage device and a magnetic storage device. In another embodiment, the computer program may also be transmitted and distributed in the form of signals on a network medium, downloaded and installed through the communication part 1109, and/or installed from the removable medium 1111. The program code contained in the computer program may be transmitted by any suitable network medium, including but not limited to a wireless one, a wired one, or any suitable combination of the above.

In such embodiments, the computer program may be downloaded and installed from the network through the communication part 1109, and/or installed from the removable medium 1111. When the computer program is executed by the processor 1101, the above-mentioned functions defined in the system of embodiments of the present disclosure are performed. According to embodiments of the present disclosure, the above-described systems, apparatuses, devices, modules, units, etc. may be implemented by computer program modules.

According to embodiments of the present disclosure, the program code for executing the computer programs provided by the embodiments of the present disclosure may be written in any combination of one or more programming languages. In particular, these computing programs may be implemented using high-level procedures and/or object-oriented programming languages, and/or assembly/machine languages. Programming languages include, but are not limited to, Java, C++, Python, "C" language or similar programming languages. The program code may be completely executed on the user computing device, partially executed on the user device, partially executed on the remote computing device, or completely executed on the remote computing device or server. In a case of involving a remote computing device, the remote computing device may be connected to a user computing device through any kind of network, including a local area network (LAN) or a wide area networks (WAN), or may be connected to an external computing device (e.g., through the Internet using an Internet service provider).

The flowcharts and block diagrams in the accompanying drawings illustrate the possible architecture, functions, and operations of the system, method, and computer program product according to various embodiments of the present disclosure. In this regard, each block in the flowcharts or block diagrams may represent a part of a module, a program segment, or a code, which part includes one or more executable instructions for implementing the specified logical function. It should be further noted that, in some alternative implementations, the functions noted in the blocks may also occur in a different order from that noted in the accompanying drawings. For example, two blocks shown in succession may actually be executed substantially in parallel, or they may sometimes be executed in a reverse order, depending on the functions involved. It should be further noted that each block in the block diagrams or flowcharts, and the combination of blocks in the block diagrams or flowcharts, may be implemented by a dedicated hardware-based system that performs the specified functions or operations, or may be implemented by a combination of dedicated hardware and computer instructions.

Those skilled in the art may understand that various embodiments of the present disclosure and/or the features described in the claims may be combined in various ways, even if such combinations are not explicitly described in the present disclosure. In particular, without departing from the spirit and teachings of the present disclosure, the various embodiments of the present disclosure and/or the features described in the claims may be combined in various ways. All these combinations fall within the scope of the present disclosure.

Embodiments of the present disclosure have been described above. However, these embodiments are for illustrative purposes only, and are not intended to limit the scope of the present disclosure. Although the various embodiments have been described separately above, this does not mean that measures in the respective embodiments may not be used in combination advantageously. The scope of the present disclosure is defined by the appended claims and their equivalents. Those skilled in the art may make various substitutions and modifications without departing from the scope of the present disclosure, and these substitutions and modifications should all fall within the scope of the present disclosure.

## Claims

1. A security inspection method, comprising:
tracking (S420) a movement trajectory of a target person and continuously acquiring a current image of a face of the target person when the target person is located in a specific region, wherein the movement trajectory comprises a relative position information between the target person and at least one candidate position in the specific region;
evaluating (S430) a quality of the current image and a quality of a candidate image after each acquisition of the current image, wherein the candidate image is a facial image of the target person with a highest quality after the target person enters the specific region; and
updating (S460) the candidate image to be the current image and binding the candidate image to the movement trajectory in a case that the quality of the current image is higher than the quality of the candidate image.

2. The method according to claim 1, further comprising:
determining a target position selected by the target person from the at least one candidate position;
acquiring (S510) a tray record for the target person based on the movement trajectory when a use of a first tray by the target person at the target position is detected, wherein the tray record comprises a tray information used at any candidate position in the specific region within a predetermined period of time; and
updating (S520) the tray record with the first tray and binding the first tray to the candidate image.

3. The method according to claim 1, wherein a first tracking identifier bound to the movement trajectory is assigned after the target person enters the specific region, and the tracking a movement trajectory of a target person comprises:
determining (S630) the relative position information based on the current image to update the movement trajectory in a case that the first tracking identifier is acquired; or
matching (S640) the current image with the candidate image in a case that no first tracking identifier is acquired, and determining the relative position information based on the current image to update the movement trajectory in a case that the matching is successful.

4. The method according to claim 3, wherein an identity information of the target person and a standard facial image of the target person are acquired before the target person enters the specific region, and the standard facial image meets a quality requirement; and
wherein the tracking a movement trajectory of a target person further comprises: in a case that no first tracking identifier is acquired and the current image is not successfully matched with the candidate image,
matching (S721) the current image with the standard facial image, and determining the movement trajectory based on the identity information in a case that the current image is successfully matched with the standard facial image; and
determining (S723) the relative position information based on the current image to update the movement trajectory in a case that the movement trajectory is determined.

5. The method according to claim 4, wherein the tracking a movement trajectory of a target person further comprises: in a case that no movement trajectory is determined based on the identity information,
assigning (S724) a second tracking identifier to the target person;
determining (S725) the relative position information based on the current image to generate a new movement trajectory, wherein the new movement trajectory is bound to the second tracking identifier; and
determining (S726) the current image as the candidate image and binding the candidate image to the new movement trajectory,
wherein the movement trajectory and the candidate image of any person in the specific region are contained in a trajectory library; and
wherein a process of tracking the new movement trajectory of the target person comprises:
matching the candidate image for the new movement trajectory with each candidate image in the trajectory library; and
merging, in a case that the candidate image for the new movement trajectory is successfully matched with a target candidate image in the trajectory library, the new movement trajectory with a movement trajectory corresponding to the target candidate image.

6. The method according to any one of claims 3 to 5, wherein the determining the relative position information based on the current image comprises:
determining the relative position information based on at least two of an information of a device capturing the current image, a facial angle information of the current image or an area information of the current image.

7. The method according to claim 2, wherein the target position is determined based on the relative position information, and detecting a use of a first tray by the target person at the target position comprises:
scanning a tag of the first tray in response to the first tray being placed at the target position by the target person.

8. The method according to claim 7, further comprising: in a case that the tray record indicates a use of a second tray,
determining the candidate image corresponding to the first tray in a case that the second tray is not bound to the candidate image; and
binding the candidate image corresponding to the first tray to the second tray.

9. The method according to claim 8, wherein the binding the candidate image corresponding to the first tray to the second tray comprises: in a case that the tray record indicates a use of the second tray by the target person at the target position,
determining a total period of time of the target position being occupied by the target person and a sub-period of time of the second tray being used; and
binding the candidate image corresponding to the first tray to the second tray in a case that the total period of time comprises the sub-period of time,
wherein the method further comprises:
sending a first binding message to a corresponding device for the target position and/or a first notification device, wherein the first binding message comprises a message indicating that the first tray and the second tray are successfully bound to the candidate image.

10. The method according to claim 8, further comprising: in a case that the tray record indicates a use of the second tray by the target person at another candidate position different from the target position,
sending a second binding message to a corresponding device for the target position and/or a first notification device, wherein the second binding message comprises a message indicating that the first tray is successfully bound to the candidate image; and/or
sending a third binding message to a corresponding device for the another candidate position and/or a second notification device, wherein the third binding message comprises a message indicating that the second tray is successfully bound to the candidate image.

11. The method according to claim 1, wherein an identity information of the target person and a standard facial image of the target person are acquired before the target person enters the specific region, and the standard facial image meets a quality requirement; and
wherein the method further comprises: after updating the candidate image to be the current image,
matching the updated candidate image with the standard facial image to acquire the identity information of the target person.

12. A security inspection apparatus (1000), comprising:
a tracking module (1010) configured to track a movement trajectory of a target person and continuously acquire a current image of a face of the target person when the target person is located in a specific region, wherein the movement trajectory comprises a relative position information between the target person and at least one candidate position in the specific region;
an evaluation module (1020) configured to evaluate a quality of the current image and a quality of a candidate image after each acquisition of the current image, wherein the candidate image is a facial image of the target person with a highest quality after the target person enters the specific region; and
an update module (1030) configured to update the candidate image to be the current image and bind the candidate image to the movement trajectory in a case that the quality of the current image is higher than the quality of the candidate image.

13. An electronic device, comprising:
one or more processors; and
a memory device configured to store one or more programs, wherein the one or more programs are configured to, when executed by the one or more processors, cause the one or more processors to implement the method of any one of claims 1 to 11.

14. A computer-readable storage medium having executable instructions therein, wherein the instructions are configured to, when executed by a processor, cause the processor to implement the method of any one of claims 1 to 11.

15. A computer program product containing a computer program, wherein the computer program is configured to, when executed by a processor, cause the processor to implement the method of any one of claims 1 to 11.
